**Europäisches Patentamt**

**European Patent Office**

**Office européen des brevets**

(11) Veröffentlichungsnummer: **0 258 658**
**B1**

(12) # EUROPÄISCHE PATENTSCHRIFT

(45) Veröffentlichungstag der Patentschrift:
22.11.90

(51) Int. Cl.⁵: **G11B 15/28**

(21) Anmeldenummer: 87111201.7

(22) Anmeldetag: 03.08.87

(54) Anordnung zum Festlegen der Bandantriebsrolle eines Magnetbandgerätes.

(30) Priorität: 05.08.86 DE 3626518

(43) Veröffentlichungstag der Anmeldung:
09.03.88 Patentblatt 88/10

(45) Bekanntmachung des Hinweises auf die Patenterteilung:
22.11.90 Patentblatt 90/47

(84) Benannte Vertragsstaaten:
AT CH DE FR GB IT LI NL SE

(56) Entgegenhaltungen:
US-A- 3 097 778
US-A- 3 251 048
US-A- 3 319 748
US-A- 3 537 631
US-A- 3 890 641
US-A- 3 930 603
US-A- 4 065 044
IBM TECHNICAL DISCLOSURE BULLETIN, Band 4, Nr. 3,
August 1961, Seite 9, New York, US; A.H. DAHLIN:
"Capstan securing device"
IBM TECHNICAL DISCLOSURE BULLETIN, Band 16,
Nr. 10, März 1974, Seiten 3153-3154, New York, US; A.M.
GUZMAN et al.: "Capstan motor having a ceramic
output shaft and an adhesively attached capstan"
IBM TECHNICAL DISCLOSURE BULLETIN, Band 16,

(73) Patentinhaber: **Siemens Aktiengesellschaft,**
**Wittelsbacherplatz 2, D-8000 München 2(DE)**

(72) Erfinder: **Ulber, Armin, Blütenstrasse 11,**
**D-8047 Karlsfeld(DE)**

(56) Entgegenhaltungen: (Fortsetzung)
Nr. 1, Juni 1973, Seiten 267-268, New York, US; D.E.
AREY et al.: "Tape drive capstan"

**Beschreibung**

Die Erfindung bezieht sich auf eine Anordnung zum Festlegen der Bandantriebsrolle auf dem aus einem keramischen Material bestehenden Wellenstummel eines Antriebsmotors für ein Magnetbandgerät gemäß dem Oberbegriff des Patentanspruches 1 (vgl. IBM Technical Disclosure Bulletin, Bd 16, Nr. 10, S. 3153 und 3154).

Bei kommerziellen Magnetbandgeräten, die als Digitalspeicher in datenverarbeitenden Systemen eingesetzt werden, wird das Magnetband häufig durch eine einzige Bandantriebsrolle (Capstan) transportiert. Aufwickelspule und Abwickelspule haben davon getrennte Antriebe, die über die Schlaufenlänge des in Pufferkammern gepufferten Bandstückes gesteuert werden. Diese Magnetbandgeräte werden im Start/Stop-Betrieb eingesetzt, die Binärdaten werden in Blöcken formatiert gespeichert bzw. ausgelesen und zwischen den Blöcken werden aus Gründen der Speicherkapazität kurze Blocklücken von nur wenigen Millimetern zugelassen. Gleichzeitig beträgt die Bandgeschwindigkeit bei schnell laufenden Magnetbandgeräten z. B. 200 ips, was im metrischen System einer Bandgeschwindigkeit von über 5 m/s entspricht.

Aus diesen Randbedingungen ist ohne weiteres erkennbar, daß an das Antriebssystem für das Magnetband, bestehend aus Bandantriebsmotor, Bandantriebsrolle und einer Bandgeschwindigkeitsregelung sehr hohe Anforderungen gestellt werden. Die auf dem Wellenstummel eines Bandantriebsmotors aufsitzende Bandantriebsrolle wird daher wegen des Massenträgheitsmomentes in einer Leichtbauweise ausge führt und besteht im wesentlichen aus einem dünnwandigen zylindrischen Käfig, in dessen Mantelfläche eine Vielzahl von Durchbrüchen vorgesehen ist und der in Achsrichtung eine Lagerhülse zur Aufnahme des Wellenstummels des Bandantriebsmotors aufweist. Zur Herstellung dieses Käfigs wird eine Leichtmetallegierung, häufig eine Magnesium-Aluminium-Legierung verwendet. Ebenfalls in Anpassung an diese Randbedingungen wird als Material für die Motorwelle des Bandantriebsmotors ein Sinterwerkstoff eingesetzt, der bei geringstem Gewicht höchste Steifigkeit im Vergleich zu anderen, sonst verwendeten Werkstoffen aufweist. Vorzugsweise besteht dieser Sinterwerkstoff aus einer Aluminium-Oxid-Keramik. Aufgrund dieses Werkstoffes gelingt es, Torsionsschwingungen der Motorwelle in einen Frequenzbereich zu verlagern, der für das Regelsystem des Bandantriebes unkritisch ist.

Allerdings hat auch diese Werkstoffauswahl gewisse Nachteile, denn die Wärmeausdehnungskoeffizienten der Werkstoffe für die Bandantriebsrolle bzw. die Motorwelle sind außerordentlich verschieden. Daraus resultieren dann Schwierigkeiten für die Festlegung der Bandantriebsrolle auf dem Wellenstummel des Bandantriebsmotors. Außerdem ist der zur Herstellung der Motorwelle verwendete Keramikwerkstoff fertigungstechnisch kritisch, es wird daher angestrebt, Änderungen des Durchmessers bei der Motorwelle, soweit möglich, auszuschalten.

Dieses Konstruktionsprinzip hat dann auch Auswirkungen auf die Art der Befestigung der Bandantriebsrolle auf dem Wellenstummel. Üblicherweise wird auf den Wellenstummel gleichförmigen Durchmessers eine Anschlaghülse aufgeschoben und mit dem Wellenstummel verklebt. Damit ist eine Anschlagfläche gebildet, gegen die die Bandantriebsrolle beim Montieren geschoben wird. Die Führungsbohrung in der Lagerhülse der Bandantriebsrolle ist mit engem Spiel gegenüber dem Außendurchmesser des Wellenstummels toleriert und sitzt daher paßgenau. Festgelegt wird die Bandantriebsrolle durch eine Befestigungsschraube, die in Achsenrichtung in das Kopfende des Wellenstummels eingedreht wird und die Lagerhülse der Bandantriebsrolle axial verspannt. Die Befestigungsschraube sitzt dabei in einer Gewindebuchse, die zentrisch in den Kopf des Wellenstummels eingelassen ist (vgl. z.B. IBM Technical Disclosure Bulletin, Bd 4, Nr. 3, S. 9).

Diese konventionelle Lösung ist beim normalen Betrieb des Magnetbandgerätes durchaus unkritisch. Jedoch hat die Erfahrung gezeigt, daß die Werkstoffpaarung trotzdem zu sporadischen Ausfällen führen kann. Untersuchungen der Ausfälle haben ergeben, daß diese auf nicht zu beherrschende Temperatureinflüsse auf dem Transportweg vom Hersteller zum Aufstellungsort des Gerätes zurückzuführen sind. Auf diesem Transportweg können weit höhere Temperaturen auftreten als sie üblicherweise z. B. in einem Rechenzentrum zu finden sind bzw. beim Betrieb des Magnetbandgerätes unter Normalbedingungen erreicht werden. Bei hinreichend hohen Temperaturen treten aufgrund der unterschiedlichen Wärmeausdehnungskoeffizienten der Werkstoffe für die Motorwelle und die Lagerhülse der Bandantriebsrolle bereits derart hohe axiale Kräfte auf, daß die Klebestelle zwischen Anschlaghülse und Wellenstummel nachgibt und sich die Anschlaghülse axial geringfügig verschiebt. Unter normalen Betriebsbedingungen sind dann die axialen Haltekräfte für die Bandantriebsrolle nicht mehr ausreichend für einen einwandfreien, schlupffreien Lauf.

Dazu kommt weiterhin, daß die verringerte Anpreßkraft der Befestigungsschraube ein Lösen dieser Schraube im Rechtslauf der Bandantriebsrolle begünstigt. Schäden am Laufwerk können die Folge sein.

Der Erfindung liegt daher die Aufgabe zugrunde, eine Anordnung der eingangs genannten Art, unter besonderer Berücksichtigung der beschriebenen Randbedingungen hin sichtlich der Beschränkung in der Werkstoffauswahl und der daraus resultierenden Festlegung von Konstruktionsprinzipien, zu schaffen, die im Hinblick auf Temperaturbelastungen wesentlich unkritischer als die bekannte Befestigung der Bandantriebsrolle und damit auch nicht vorhersehbaren bzw. beherrschbaren Temperatureinflüssen gewachsen ist.

Bei einer Anordnung der eingangs genannten Art wird diese Aufgabe erfindungsgemäß gelöst durch die im Kennzeichen des Patentanspruches 1 beschriebenen Merkmale.

Bei dieser Lösung wird von dem Verspannen der Bandantriebsrolle in axialer Richtung zum Zwecke ihrer Festlegung auf dem Wellenstummel des Antriebsmotors abgegangen. Aus diesem Grunde können hier Maßänderungen der Lagerhülse gegenüber dem Wellenstummel aufgrund einer thermischen Ausbildung keine Störungen mehr verursachen. Die Bandantriebsrolle wird bei der erfindungsgemäßen Lösung vielmehr durch Spannkräfte in radialer Richtung gehalten. Dabei ist es ein wesentliches Merkmal, daß die Spannlippe aufgrund ihrer geometrischen Ausgestaltung und des zur Herstellung der Bandantriebsrolle verwendeten Werkstoffes auf dem Außendurchmesser des Wellenstummels elastisch verspannt ist. Dies zeigt sich beispielsweise darin, daß auch die erfindungsgemäße Befestigungsanordnung lösbar ist. Andererseits bedeutet diese elastische Verspannung der Spannlippe aber auch, daß Wärmedehnungen dadurch aufgefangen werden können, ohne daß irreversible Schäden auftreten.

Ein anderes wesentliches Merkmal der erfindungsgemäßen Lösung ist es, daß sie keinerlei Änderungen bei den Werkstoffpaarungen, sowie der konstruktiven Ausgestaltung des Wellenstummels des Antriebsmotors erfordert. Insbesondere sind Eindrehungen, Radialnuten, wie sie häufig bei üblichen Befestigungen von Antriebselementen auf einer Motorwelle verwendet werden, mit Rücksicht auf die besonderen Werkstoffeigenschaften der Motorwelle vermieden.

Für die Rundlaufeigenschaften der Bandantriebsrolle ist es von wesentlicher Bedeutung, daß die Verspannkräfte auf dem Umfang verteilt gleichmäßig auftreten. Dies ist bei der erfindungsgemäßen Lösung dadurch sichergestellt, daß die Innendurchmesser der Führungsbohrung und der Spannlippe im nicht vorgespannten Zustand identisch sind, d. h. sie werden in einer Aufspannung gemeinsam fertiggestellt. Beim Einschrauben der Spannmutter drückt sich daher die Spannlippe auf dem Umfang verteilt gleichmäßig an den Außendurchmesser des Wellenstummels an, dabei liegt der Angriffspunkt der Kraft am inneren Ende der Spannlippe, also nahe am Außendurchmesser des Wellenstummels, so daß sich ein günstiges Kräftemoment an der Spannlippe ergibt.

Wie Weiterbildungen der Erfindung zeigen, erlaubt die erfindungsgemäße Lösung auch eine Montage der Bandantriebsrolle auf dem Wellenstummel mit sehr einfachen Mitteln. Denn es bedarf dazu nur zweier verschiedener Schlüssel, die am äußeren Bund der Bandantriebsrolle bzw. an der Spannmutter angreifen. Die erfindungsgemäße Lösung ist daher in der Herstellung, aber auch für die Montage einfach und kostengünstig. Sie erlaubt es sogar, ohne eine in das Kopfende des Wellenstummels eingebettete Gewindemutter auszukommen. Dieses Konstruktionsdetail der konventionellen Befestigungsanordnung verteuert die Herstellung der Motorwelle, wie sich nun zeigt, in unnötiger Weise.

Andere Weiterbildungen der Erfindung ergeben sich aus der Gesamtheit der Unteransprüche, weitere Vorteile sind der nachfolgenden Beschreibung eines Ausführungsbeispieles zu entnehmen, die anhand der Zeichnung erfolgt. Dabei zeigt:

Fig. 1 in einer dreidimensionalen, teilweise aufgeschnittenen Darstellung ein Beispiel für eine erfindungsgemäße Anordnung zum Festlegen einer Bandantriebsrolle auf dem Wellenstummel eines Antriebsmotors eines Magnetbandgerätes,

Fig. 2 in einem Halbschnitt eine Seitenansicht der Ausgestaltung der Lagerhülse der Bandantriebsrolle für eine Anordnung gemäß Fig. 1 und

Fig. 3 in einer Explosionsdarstellung die Bandantriebsrolle einer erfindungsgemäßen Anordnung zusammen mit den zugehörigen Montagewerkzeugen.

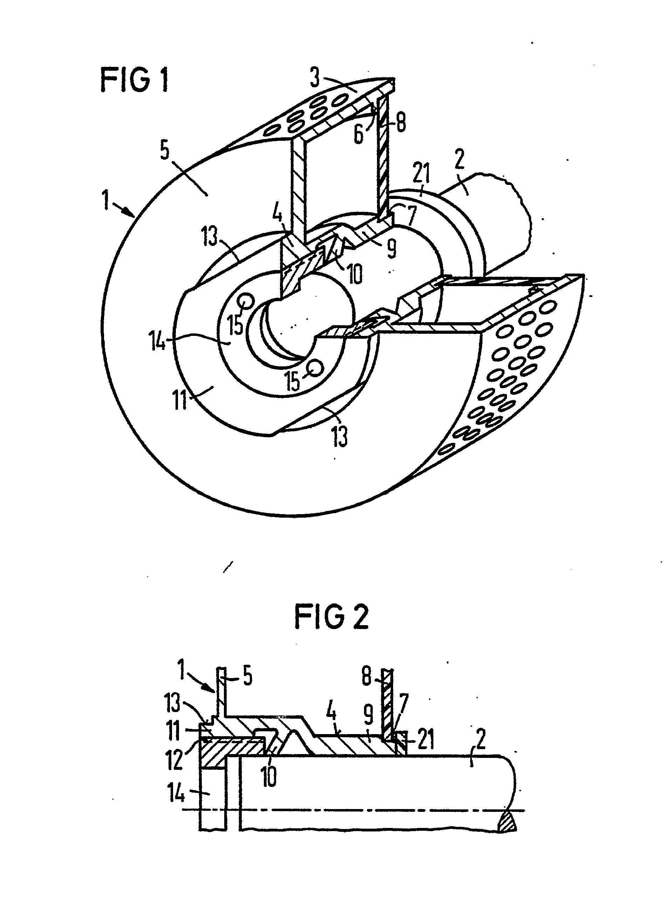

Fig. 1 zeigt eine Anordnung zum Festlegen einer Bandantriebsrolle 1 auf einem aus einem keramischen Material, z. B. einer Aluminium-Oxid-Keramik bestehenden Wellenstummels 2 eines Antriebsmotors für ein Magnetbandgerät. Der Antriebsmotor selbst ist hier nicht dargestellt, da er an sich bekannt ist und keinen Teil der Erfindung bildet. Der Wellenstummel 2 ist ein zylindrischer Schaft ohne jede Eindrehung und weist keinerlei Ansätze auf. Dieses Konstruktionsdetail berücksichtigt das Herstellungsverfahren für die Welle des Antriebsmotors, wobei die Wellenform zunächst im noch teigigen Zustand der Keramikmasse festgelegt wird und anschließend ein Aushärtungsprozeß stattfindet. Im ausgehärteten Zustand ist dann die Motorwelle nur noch schwer bearbeitbar.

Die Grundform der Bandantriebsrolle 1 ist ein zylindrischer Hohlkörper mit einer gelochten Mantelfläche 3 und einer zentrischen Lagerhülse 4. Die Bandantriebsrolle 1 besitzt also einen U-förmigen Querschnitt mit in Achsenrichtung des Wellenstummels 2 angeordneten Schenkeln, gebildet aus der Mantelfläche 3 bzw. der Lagerhülse 4. Verbunden sind diese Schenkel durch eine dünne Frontfläche 5. Die Mantelfläche 3 und die Lagerhülse 4 weisen jeweils an ihren der Frontfläche 5 abgekehrten Enden Ansätze 6 bzw. 7 auf, zwischen denen als Rückwand 8 der Bandantriebsrolle 1 eine dünne Scheibe aus Kunststoff eingespannt ist.

Das motorseitige, von der Frontfläche 5 abgewandte Ende der Lagerhülse 4 ist als Führungsring 9 der Bandantriebsrolle 1 auf dem Wellenstummel 2 ausgebildet und besitzt zu diesem Zweck eine gegenüber dem Außendurchmesser des Wellenstummels 2 eng tolerierte Führungsbohrung. Weiterhin weist die Lagerhülse 4 eine Spannlippe 10 auf, die von dem inneren Ende des Führungsringes 9 durch einen V-förmigen Einschnitt abgesetzt ist. Diese Spannlippe ist dünnwandig ausgeführt, gegenüber der Achsenrichtung des Wellenstummels 2 unter einem Anstellwinkel geneigt und weist einen Innendurchmesser auf, der im unbelasteten Zustand mit dem des Führungsringes 9 übereinstimmt. Das Frontende der Lagerhülse 4 schließlich bildet ein aus der Frontfläche 5 hervorspringender Bund 11 mit einem Innengewinde 12 und zwei parallel verlaufenden Anschnittflächen 13.

Das Innengewinde 12 der Lagerhülse 4 dient zum Aufnehmen einer Spannmutter 14 mit einem dem Innengewinde 12 entsprechenden Außengewinde, einem Innendurchmesser mit einer Spielpassung gegenüber dem Außendurchmesser des Wellenstummels 2 und einem Kopfteil, in das zwei einander diadiametral gegenüberstehende Bohrungen 15 in Achsenrichtung eingelassen sind.

Aus dem in Fig. 2 dargestellten Halbschnitt der Anordnung der Bandantriebsrolle 1 auf dem Wellenstummel 2 ist wohl am deutlichsten die Wirkungsweise der vorstehend beschriebenen Anordnung zu entnehmen. Zum Festlegen einer definierten axialen Position der Bandantriebsrolle 1 in bezug auf den Wellenstummel 2 ist auf diesem ein Anschlagring 21 festgeklebt. Bei einer auf den Wellenstummel 2 aufgesetzten Bandantriebsrolle 1 liegt die motorseitige Endfläche der Lagerhülse 4 am Anschlagring 21 und die innere Endfläche der Spannmutter 14 an der Spannlippe 10 an. Wegen der Neigung der Spannlippe 10 und der scharfkantigen Ausbildung der Endfläche der Spannmutter 14 liegt der Kraftangriffspunkt nahe an der Oberfläche des Wellenstummels 2. Dieser Kraftangriffspunkt ist von dem Fußpunkt der Spannlippe 10, d. h. dem Übergang in die Mantelfläche der Lagerhülse 4, optimal abgesetzt, so daß sich ein günstiges Kräftemoment ergibt.

Unter Wirkung der von der Spannmutter 14 ausgeübten Andruckkraft verformt sich die Spannlippe 10 und verspreizt sich dabei gegenüber der Oberfläche des Wellenstummels 2. Aufgrund dieser Spreizwirkung der Spannlippe ist die Bandantriebsrolle 1 auf dem Wellenstummel eindeutig, jedoch lösbar, festgelegt, denn die Verformung der Spannlippe 10 liegt noch im elastischen Bereich.

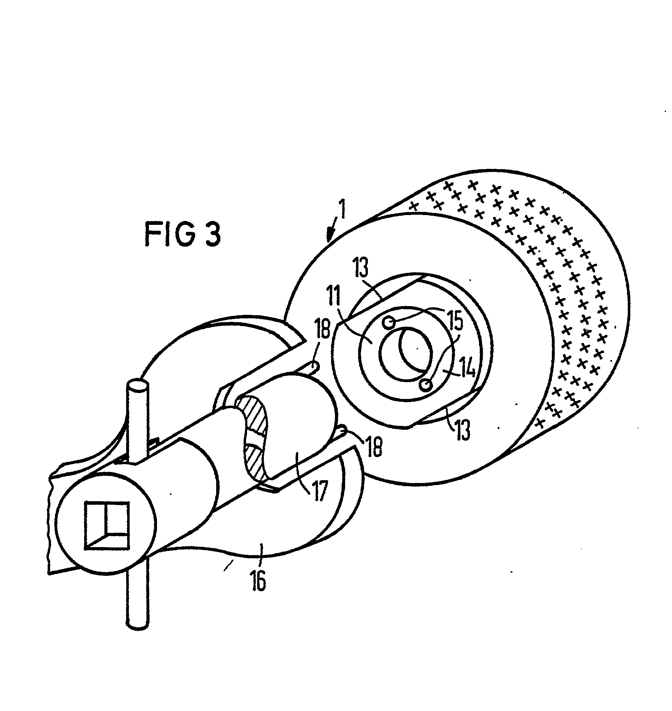

Fig. 3 illustriert für die beschriebene Anordnung den eben erläuterten Montagevorgang insbesondere im Hinblick auf die dabei verwendeten Werkzeuge. Die parallel verlaufenden Anschnittflächen 13 des Bundes 11 der Bandantriebsrolle 1 dienen zum Ansetzen eines Gabelschlüssels 16. Die Gegenkraft zum Einschrauben der Spannmutter 14 wird durch einen Steckschlüssel 17 aufgebracht, der zwei Dorne 18 als Gegenstücke zu den Bohrungen 15 in der Spannmutter 14 aufweist. Der Steckschlüssel 17 wird vorzugsweise als Drehmomentenschlüssel ausgebildet sein, damit die von der Spannmutter 14 auf die Spannlippe 10 übertragenen Kräfte nach oben begrenzt sind, so daß eine Überdehnung der Spannlippe 10 vermieden wird.

## Patentansprüche

1. Anordnung zum Festlegen einer Bandantriebsrolle (1) auf dem aus einem keramischen Material bestehenden Wellenstummel (2) eines Antriebsmotors für ein Magnetbandgerät, wobei die Bandantriebsrolle in Leichtbauweise als Hohlzylinder mit gelochter Mantelfläche ausgebildet ist, und eine Lagerhülse (4) zum Aufnehmen des Wellenstummels aufweist, dadurch gekennzeichnet, daß die Lagerhülse (4) am motorseitigen Ende einen in bezug auf den Außendurchmesser des Wellenstummels eng tolerierten Führungsring (9), am gegenüberliegenden äußeren Ende eine Gewindebohrung (12) zur Aufnahme einer Spannmutter (14) mit Außengewinde aufweist und im Übergangsbereich vom Führungsring zur Gewindebohrung eine Spannlippe (10) besitzt, die sich beim Montieren der Bandantriebsrolle (1) auf dem Wellenstummel unter dem Druck der Spannmutter elastisch verformend, an dem Wellenstummel rotationssymmetrisch verkeilt.

2. Anordnung nach Anspruch 1, dadurch gekennzeichnet, daß die Fertigmaße der Innendurchmesser des Führungsringes (9) und der Spannlippe (10) im unbelasteten Zustand identisch sind.

3. Anordnung nach Anspruch 1 oder 2, dadurch gekennzeichnet, daß die Spannlippe (10) mit ihrer Rückseite von dem Führungsring (9) durch einen keilförmigen Einstich in die Wandung der Lagerhülse (4) abgesetzt ist, eine im wesentlichen gleichmäßige dünne Wandstärke aufweist und im unbelasteten Zustand gegenüber der Zentralachse der Bandantriebsrolle (1) geneigt angeordnet ist.

4. Anordnung nach einem der Ansprüche 1 bis 3, dadurch gekennzeichnet, daß der Innendurchmesser der Spannmutter (14) als Spielpassung in bezug auf den Außendurchmesser des Wellenstummels (2) toleriert ist.

5. Anordnung nach einem der Ansprüche 1 bis 4, dadurch gekennzeichnet, daß die Lagerhülse (4) an ihrem äußeren Ende einen vorspringenden Bund (11) aufweist, der als Kopf zum Ansetzen eines Montagewerkzeuges ausgebildet ist und daß die Spannmutter (14) als Gewindering ausgebildet ist, dessen der Spannlippe (10) abgekehrtes Ende ein Gegenprofil zum Ansetzen eines weiteren Montagewerkzeuges besitzt.

6. Anordnung nach Anspruch 5, dadurch gekennzeichnet, daß der Bund (11) der Lagerhülse (4) zwei einander diametral gegenüberstehende Anschnittflächen (13) zum Ansetzen eines Gabelschlüssels aufweist und daß im Kopfende der Spannmutter (14) zwei in Achsenrichtung verlaufende Bohrungen (15) zum Ansetzen eines Steckschlüssels (17) vorgesehen sind.

## Revendications

1. Dispositif pour fixer le rouleau (1) d'entraînement d'une bande sur un bout d'arbre (2), réalisé en un matériau céramique, d'un moteur d'entraînement pour un appareil à bande magnétique, le rouleau d'entraînement de la bande étant constitué par une structure légère sous la forme d'un cylindre creux possédant une surface enveloppe perforée, et possédant un coussinet de support (4) servant à loger le bout d'arbre, caractérisé par le fait que le coussinet de support (4) possède, sur l'extrémité située du côté du moteur, un anneau de guidage (9) possédant une tolérance étroite par rapport au pourtour extérieur du bout d'arbre et, sur l'extrémité extérieure opposée, un perçage taraudé (12) destiné à recevoir un écrou de serrage (14) possédant un filetage extérieur, et comporte, dans la zone de jonction entre l'anneau de guidage et le perçage taraudé, une lèvre de serrage (10) qui, lors du montage du rouleau (1) d'entrainement de la bande, se coince, dans une position à symétrie de révolution, sur le bout d'arbre, en se déformant élastiquement sous l'effet de la pression de l'écrou de serrage.

2. Dispositif selon la revendication 1, caractérisé par le fait que les cotes finales des diamètres intérieurs de l'anneau de guidage (9) et de la lèvre de serrage (10) sont identiques, à l'état non placé sous contrainte.

3. Dispositif selon la revendication 1 ou 2, caractérisé par le fait que la face arrière de la lèvre de serrage (10) est décalée par rapport à l'anneau de guidage (9) par suite de la présence d'un évidement en forme de coin dans la paroi du coussinet de support (4), possède une faible épaisseur de paroi sensiblement uniforme et, à l'état non placé sous contrainte, est inclinée par rapport à l'axe central du rouleau (1) d'entraînement de la bande.

4. Dispositif suivant l'une des revendications 1 à 3, caractérisé par le fait que le diamètre intérieur de l'écrou de serrage (14) présente, en tant que système d'adaptation de jeu, une tolérance par rapport au diamètre extérieur du bout d'arbre (2).

5. Dispositif suivant l'une des revendications 1 à 4, caractérisé par le fait que le coussinet de support (4) possède, sur son extrémité extérieure, un collet saillant (11), qui est réalisé sous la forme d'une tête permettant la mise en place d'un outil de montage et que l'écrou de serrage (14) est réalisé sous la forme d'une bague filetée dont l'extrémité tournée à l'opposé de la lèvre de serrage (10) possède un profil antagoniste permettant la mise en place d'un autre outil de montage.

6. Dispositif suivant la revendication 5, caractérisé par le fait que le collet (11) du coussinet de support (14) possède deux surfaces découpées (13) diamétralement à l'opposé l'une de l'autre, pour le montage d'une clé à fourche et que deux perçages (15), qui s'étendent dans la direction de l'axe et qui sont utilisés pour la mise en place d'une clé à douille (17), sont prévus dans l'extrémité de tête de l'écrou de serrage (14).

**Claims**

1. Arrangement for fixing a capstan (1) on the shaft stub (2), consisting of a ceramic material, of a drive motor for a magnetic-tape apparatus, the capstan being designed of lightweight design in the form of a hollow cylinder with a perforated lateral surface and having a bearing sleeve (4) for accommodating the shaft stub, characterized in that, at the end towards the motor, the bearing sleeve (4) has a guide ring (9) narrowly toleranced in relation to the outside diameter of the shaft stub, at the opposite, outer end has a threaded bore (12) for accommodating a clamp nut (14) having an external thread and, in the transitional zone from the guide ring to the threaded bore, has a clamping lip (10) which, deforming elastically under the pressure of the clamp nut during the mounting of the capstan (1) on the shaft stub, wedges in rotationally symmetrical fashion against the shaft stub.

2. Arrangement according to claim 1, characterized in that, in the unstressed condition, the finished sizes of the inside diameters of the guide ring (9) and of the clamping lip (10) are identical.

3. Arrangement according to claim 1 or 2, characterized in that, with its rear side, the clamping lip (10) is offset from the guide ring (9) by a wedge-shaped recess in the wall of the bearing sleeve (4), has an essentially uniform thin wall thickness and, in the unstressed condition, is arranged obliquely relative to the central axis of the capstan (1).

4. Arrangement according to one of claims 1 to 3, characterized in that the inside diameter of the clamp nut (14) is toleranced as a clearance fit in relation to the outside diameter of the shaft stub (2).

5. Arrangement according to one of claims 1 to 4, characterized in that, at its outer end, the bearing sleeve (4) has a projecting collar (11), which is designed as a head for the application of an assembly tool, and in that the clamp nut (14) is designed as a threaded ring whose end turned away from the clamping lip (10) has a counterprofile for the application of another assembly tool.

6. Arrangement according to claim 5, characterized in that the collar (11) of the bearing sleeve (4) has two diametrically opposite cut edges (13) for the application of an open-end spanner and in that, provided in the top of the clamp nut (14), are two bores (15) extending in the axial direction for the application of a socket spanner (17).

FIG 1

FIG 2

FIG 3